# EUROPÄISCHE PATENTANMELDUNG

(11) **EP 0 760 583 A2**
(43) Veröffentlichungstag der Anmeldung: **05.03.1997**
(21) Anmeldenummer: 96113299.0
(22) Anmeldetag: 20.08.1996
(51) Int. Cl.: H04N 7/088

(54) **Fernsehgerät mit einer Empfangs- und Akquirierschaltung für Teletextsendungen**

(30) Priorität: 25.08.1995 DE 19531486
(71) Anmelder: NOKIA TECHNOLOGY GmbH, 75175 Pforzheim (DE)
(72) Erfinder: Freiburger, Ewald, 75245 Neulingen (DE); Goldschmidt, Horst, 58454 Witten (DE); Kugler, Armin, 75215 Birkenfeld (DE)

(57) **Zusammenfassung**

Ein Fernsehgerät, das eine Empfangs- und Akquirierschaltung für Teletextsendungen (10, 11, 12) aufweist und bei dem in einem Wartebetrieb Schaltungsteile von einem aktiven Betrieb in einen inaktiven und leistungsarmen Betrieb umschaltbar sind, ist erfindungsgemäß für eine zusätzliche, spezielle Art von Wartebetrieb ausgerüstet. Bei diesem Wartebetrieb befindet sich die Empfangs- und Akquirierschaltung in einem aktiven Betrieb und schaltet über eine Stand-by-Steuerung beim Erkennen eines bestimmten übertragenen Steuerbits Schaltungsteile, die sich im inaktiven und leistungsarmen Betrieb befinden, insbesondere den Bildwiedergabeteil (18) vom inaktiven in den aktiven Betrieb, und löst ein Ausgeben von mindestens einer ausgewählten Textseite auf dem Bildschirm (19) aus. Dazu wertet die Empfangs- und Akquirierschaltung ein Steuerbit aus, welches eine redaktionelle Aktualisierung der ausgewählten Textseite anzeigt und das Ausgeben von aktualisierten Textseiten veranlaßt.

Die Empfangs- und Akquirierschaltung enthält einen Tuner (10) und einen Signalaufbereitungsteil (11), welcher ein geträgertes Fernsehsignal mit eingelagerten Teletextdaten zum Darstellen von Teletextseiten empfängt und dieses in ein kombiniertes Videosignal (CVBS) wandelt, einem Teletextteil (12) zum Erkennen und Dekodieren von Teletextdaten, zum Auswählen und Speichern der Teletextdaten, die bestimmten vom Benutzer gewünschten Textseiten entsprechen, und zum Wandeln der gespeicherten Daten in ein Bildsignal (RGB), das mit dem Bildwiedergabeteil auf dem Bildschirm darstellbar ist. Darüber hinaus sind Schaltmittel zum Betätigen der Stand-by-Steuerung beim Empfang von mit den Teletextdaten übertragenen Steuerbits vorhanden.

## Beschreibung

Die Erfindung betrifft ein Fernsehgerät, das eine Empfangs- und Akquirierschaltung für den Empfang und die Darstellung von Teletextsendungen und einer Stand-by-Schaltung enthält, mit der Teile der Fernsehgeräteschaltung zwischen einem aktiven Betrieb und einem leistungsarmen Wartebetrieb umschaltbar sind. Die Empfangs- und Akquirierschaltung selektiert aus einem empfangenen Fernsehsignal, das Teletextinformation enthält, Teletextdaten für ausgewählte Textseiten, erzeugt ein Bildsignal zum Darstellen der ausgewählten Textseiten mit einem Bildwiedergabeteil auf einem Bildschirm und wertet mit den Teletextdaten übertragene Steuerbits aus.

Eine weit verbreitete und bekannte Dienstleistung der Anbieter von Fernsehprogrammen ist das Übertragen von Teletextinformation als Bestandteil einer laufenden Fernsehsendung. Dabei werden Pakete von digitalen Teletextdaten beispielsweise in der vertikalen Austastlücke von Fernsehbildsignalen gesendet. Systembedingt sind Teletextdaten derart aufbereitet, daß jeweils mit einer für eine Teletextübertragung vorgesehenen Fernsehbildzeile alle darstellbaren alphanumerischen oder graphischen Zeichen einer Textseitenreihe in Form von Kodewörtern mit jeweils einer Länge von acht Bit gesendet werden. Neben Kodewörtern zum visuellen Darstellen von entsprechenden Zeichen müssen eine Vielzahl von Steuerwörtern übertragen werden, um beispielsweise ein Zuordnen der Textseitenreihe zur entsprechenden Teletextseite zu ermöglichen. Weitere Steuerwörter dienen zum Übertragen des Rahmenwortes und eines Burstsignals zur Taktsynchronisation. Durch eine Kopfreihe (Reihe O) wird der Beginn der Übertragung einer Teletextseite festgelegt. In der Kopfreihe sind unter anderem Steuerwörter enthalten, die Informationsbits für Reihenadresse, Seitennummer und Uhrzeit enthalten. Darüber hinaus sind Steuerbits vorhanden, die den Dekoder veranlassen, bestimmte Funktionen auszuführen. Derartige Steuerbits zeigen beispielsweise an, wenn sich der Inhalt einer Seite erheblich ändert und veranlassen dann eine vollständige Löschung des Seitenspeichers im Dekoder, so daß dieser wieder neu geschrieben werden kann. Ein anderes Steuerbit zeigt an, daß die jeweilige Seite Kurznachrichten oder aktuelle Meldungen überträgt. Bei Wiedergabe einer derartigen Seite kann die empfangene Kurznachricht in das Bild des laufenden Fernsehprogrammes eingeblendet werden. Ein weiteres Steuerbit (C8) liefert eine Indikation dafür, daß eine Seite in der Redaktion neu geschrieben bzw. auf den neuesten Stand gebracht worden ist.

Es sind Fernsehgeräte mit einem Teletextteil bekannt, die es dem Nutzer ermöglichen, vom laufenden Teletextbetrieb direkt in den Fernsehbetrieb umzuschalten, in dem das Fernsehprogramm wiedergegeben wird, ohne daß der Teletextteil seine Funktion einstellt. In einem solchen Fall akquiriert das Teletextteil parallel zur Fernsehwiedergabe die zuletzt eingestellte Textseite. Es ist auch bekannt, ein Teletextteil mit einer Schaltung vorzusehen, welche die Übertragung des oben genannten Steuerbits (C8) zum Anzeigen der redaktionellen Aktualisierung einer Textseite überwacht und beim Eintreten dieses Ereignisses in das Fernsehbild des laufenden Fernsehprogramms eine Information einblendet, die anzeigt, daß die eingestellte Textseite redaktionell überarbeitet wurde. Der Nutzer kann dann, wenn er es wünscht, auf Teletextbetrieb zurückschalten und die aktualisierte Seite betrachten.
Aus der Druckschrift US-5 374 961 ist ein Gerät und eine Methode zum Bereitstellen der aktuellen Information beim Teletextempfang bekannt. Dieses Gerät weist erste und zweite Speichermittel zum Speichern bereits angezeigter bzw. aktuell eingehender Videodaten sowie einen Komparator zum Vergleichen der Daten auf. Alte, bereits angezeigte und neu eingehende Daten werden ständig verglichen. Wenn beim Vergleichen ein bestimmter Differenzpegel überschritten wird, gibt der Komparator ein Steuersignal ab, das die neue Information auf dem Bildschirm anzeigt. Ist jedoch die aktuelle Information mit der bereits gespeicherten identisch, bleibt das Gerät im Fernseh- und Videorecorder-Betrieb.
Die Möglichkeit, beim Aktualisieren einer Textseite automatisch auf Teletextbetrieb zurückzuschalten, hat sich als ungünstig erwiesen, weil eine solche Betriebsweise eine lästige Unterbrechung des betrachteten Fernsehprogramms darstellen kann. Ein wachsendes Angebot an Teletextinformation hat dazu geführt, daß dem Nutzer eine Reihe von hoch aktuellen Informationen, wie Ankunfts- und Abflugzeiten von Flughäfen, Börsennachrichten, Verkehrs- und Wetterinformation und ähnliches angeboten werden, die er besonders häufig empfangen möchte. Dieses ist mit den bekannten Lösungen jedoch nur bei eingeschaltetem Fernsehgerät möglich, das entweder ständig auf Teletextbetrieb oder auf Fernsehbetrieb geschaltet sein muß. In beiden Fällen ist ein häufiges Betrachten des Bildschirms erforderlich, um ein Aktualisieren einer Teletextseite optisch zu bemerken. In diesem Fall kann die Wiedergabe des laufenden Fernsehprogramms, das der Nutzer nicht sehen möchte, oder ein wiederholtes Betrachten einer bereits gelesenen Teletextinformation lästig sein. Ein solches Fernsehgerät verbraucht außerdem in dieser Zeit eine unnötig große Menge an elektrischer Energie.

Es sind auch Fernsehgeräte bekannt, deren Netzteil über eine Fernbedienung in einen stromlosen Wartebetrieb geschaltet wird. Geräte dieser Art weisen in der Regel drei verschiedene Betriebszustände auf. Diese sind der ausgeschaltete Zustand, bei dem keine Baugruppe Netzspannung erhält, der Wartebetrieb (Stand-by) und der aktive Zustand, bei dem das Gerät voll funktionsfähig ist. Mittels einer Fernbedienung kann zwischen den beiden letztgenannten Betriebszuständen umgeschaltet werden. Im Wartebetrieb muß zumindest ein Fernbedienempfänger und eine Startschaltung zum Einschalten des Gerätes in den aktiven Zustand mittels der Fernbedienung durch Energiezufuhr empfangsbereit gehalten werden. Obwohl bei einer Vielzahl dieser Fernsehgeräte der Microcontroller zum Dekodieren und Umsetzen von Fernbediensignalen während des Stand-by-Betriebes betriebsbereit ist, können diese Geräte im Stand-by-Betrieb keine Teletextsignale empfangen und verarbeiten.

Es ist Aufgabe der Erfindung, die genannten Mängel der bekannten Lösungen zu vermeiden.

Die Aufgabe wird dadurch gelöst, daß ein Fernsehgerät, das eine Empfangs- und Akquirierschaltung für Teletextsendungen aufweist und bei dem in einem Wartebetrieb Schaltungsteile von einem aktiven Betrieb in einen inaktiven und leistungsarmen Betrieb umschaltbar sind, erfindungsgemäß für eine zusätzliche, spezielle Art von Wartebetrieb ausgerüstet ist. Bei diesem Wartebetrieb befindet sich die Empfangs- und Akquirierschaltung im aktiven Betrieb und schaltet über eine Stand-by-Steuerung beim Erkennen eines bestimmten übertragenen Steuerbits Schaltungsteile, die sich im inaktiven und leistungsarmen Betrieb befinden, insbesondere den Bildwiedergabeteil vom inaktiven in den aktiven Betrieb und löst ein Ausgeben von mindestens einer ausgewählten Textseite auf dem Bildschirm aus. Dazu wertet die Empfangs- und Akquirierschaltung ein Steuerbit aus, welches eine redaktionelle Aktualisierung der ausgewählten Textseite anzeigt und das Ausgeben von aktualisierten Textseiten veranlaßt.

Die Empfangs- und Akquirierschaltung enthält einen Tuner und einen Signalaufbereitungsteil, welcher ein geträgertes Fernsehsignal mit eingelagerten Teletextdaten zum Darstellen von Teletextseiten empfängt und dieses in ein kombiniertes Videosignal (CVBS) wandelt, einem Teletextteil zum Erkennen und Dekodieren von Teletextdaten, zum Auswählen und Speichern der Teletextdaten, die bestimmten vom Benutzer gewünschten Textseiten entsprechen, und zum Wandeln der gespeicherten Daten in ein Bildsignal (RGB), das mit dem Bildwiedergabeteil auf dem Bildschirm darstellbar ist. Darüber hinaus sind Schaltmittel zum Betätigen der Stand-by-Steuerung beim Empfang von mit den Teletextdaten übertragenen Steuerbits vorhanden.

Ein solches erfindungsgemäßes Fernsehgerät kann vom Benutzer nach dem Betrachten einer ausgewählten Textseite in den speziellen Wartebetrieb versetzt werden, in dem die Bild- und Tonwiedergabe inaktiv geschaltet sind und der Verbrauch von elektrischer Leistung gegenüber dem aktiven Betrieb wesentlich verringert ist. In dieser Wartebetriebsart empfängt und verarbeitet das Fernsehgerät kontinuierlich die Teletextdaten (TTX) und wartet auf die Übertragung des Steuerbits, welches eine redaktionelle Aktualisierung der ausgewählten Textseite anzeigt, um beim Erkennen dieses Steuerbits selbsttätig zumindest den Bildwiedergabeteil einzuschalten.

Nach einer vorteilhaften Weiterbildung der Erfindung befinden sich im speziellen Wartebetrieb nur eine Fernbedieneinrichtung zum Empfangen und Umsetzen von Nutzerbefehlen und solche Teile der Empfangs- und Akquirierschaltung im aktiven Betrieb, die zum Empfangen und Erkennen des bestimmten Steuerbits dienen und das Zuschalten von inaktiven Schaltungsteilen bewirken. Dieses hat den Vorteil, daß im speziellen Wartebetrieb der Energieverbrauch noch weiter reduziert ist und der Fernsehempfänger mit der Fernbedienung jederzeit in den aktiven Betrieb oder den bekannten Wartebetrieb, in dem keine Teletextdaten empfangbar sind, geschaltet werden kann.

Nach einer anderen vorteilhaften Weiterbildung der Erfindung enthält die Empfangs- und Akquirierschaltung einen Seitenadressen-Speicher zum Speichern von mehreren Magazin- und Seitennummern, die vom Nutzer ausgewählte Textseiten betreffen, und eine Vergleichs- und Prüfschaltung, welche die Magazin- und Seitennummern von den übersandten Teletextdaten mit den gespeicherten Magazin- und Seitennummern vergleicht. Bei Identität der Magazin- und Seitennummern wird geprüft, ob gleichzeitig das bestimmte Steuerbit (C8) übertragen wird. Als Folge dessen bewirkt die Empfangs- und Akquirierschaltung das Einschalten des Bildwiedergabeteils mit dem Bildschirm und veranlaßt ein Ausgeben der entsprechenden Teletextseite von den ausgewählten, die soeben aktualisiert wurde.

Eine besondere Ausführungsform der Erfindung betrifft Fernsehgeräte, die für den Anschluß an ein internes Kabelnetz einer Kabelfernsehanlage in einem Hotel, einem Krankenhaus oder einer ähnlichen Einrichtung vorgesehen sind.

Bei derartigen Fernsehgeräten ist die Stand-by-Steuerung so ausgelegt, daß diese beim Umschalten in den Wartebetrieb das Fernsehgerät immer unabhängig von vorangegangenen Einstellungen auf einen bestimmten Empfangskanal, eine bestimmte Magazin- und Seitennummer einstellt. Dabei entspricht der eingestellte Empfangskanal einer Sendefrequenz, auf dem im internen Kabelnetz ein hausinterner Teletextdienst arbeitet. Jedes Fernsehgerät wird von einem Kundendienst so programmiert, daß die Magazin- und Seitennummer der Zimmernummer entspricht, in der das Fernsehgerät aufgestellt ist. Auf diese Weise können über den hausinternen Teletextdienst einzelne Fernsehgeräte in den Zimmern zielgerichtet eingeschaltet werden. Dieses ist z.B. als besondere Dienstleistung in Hotels wünschenswert, um einen Gast bei der Ankunft in seinem Zimmer persönlich zu begrüßen und auf Teletexttafeln über den Hotelservice u.ä. zu informieren. In dieser besonderen Ausführungsform des Fernsehgerätes ist es empfehlenswert, die Teletextadressen für die einzelnen Zimmer nur in bestimmten Magazinnummern unterzubringen und für diese Magazine den Zugriff durch Gäste geräteseitig zu sperren.

Die Erfindung soll nachstehend an Hand von Ausführungsbeispielen erläutert werden. Die zugehörigen Figuren zeigen im Einzelnen:
- Fig. 1:: Ein Prinzipschaltbild eines Fernsehempfängers gemäß der Grundausführungsform der Erfindung.
- Fig. 2:: Ein Schaltungsauszug mit einem Teletextteil von einer besonderen Ausführungsform der Erfindung.

Der erfindungsgemäße Fernsehempfänger weist zum Empfangen und Aufbereiten eines Fernsehsignals mit Teletextinformation eine Empfangs- und Akquirierschaltung auf.

Die Empfangs- und Akquirierschaltung beinhaltet in bekannter Weise einen Tuner 10, einen Signalaufbereitungsteil 11 und einen Teletextteil 12. Der Tuner 10 empfängt und selektiert ein geträgertes Fernsehsignal. Der Signalaufbereitungsteil beinhaltet den Bild- und den Tondemodulator und wandelt das geträgerte Fernsehsignal in ein kombiniertes Videosignal CVBS, welches neben den Austast- und Synchronzeichen die Luminanz-, Chrominanz- und Teletextinformation enthält, und in mindestens ein Audiosignal zurück. Der Signalverarbeitungsteil 11 weist außerdem bekannte Mittel zum Abtrennen der Austast- und Synchronzeichen auf. Das Videosignal CVBS wird einem Chromaprozessor 13, der die Luminanz- und Chrominanzinformation dekodiert und ein Bildsignal RGB erzeugt und dem Teletextteil 12 zugeführt. Der Teletextteil 12 beinhaltet einen Datenerkennungs- und Verarbeitungsteil 14. Dieser erkennt im Videosignal CVBS die Steuerwörter mit dem Burstsignal zur Taktsynchronisation und das Rahmenwort, das den Beginn einer Bildzeile mit Teletextdaten TTX kennzeichnet.

Im Datenerkennungs- und Verarbeitungsteil 14 erfolgt im Wesentlichen ein zeitliches Abtrennen der in einzelnen Bildzeilen des Videosignals CVBS gesendeten Teletextdaten TTX, ein Erzeugen eines zu den gesendeten Kodewörtern synchronen Datentaktsignals, ein Umwandeln der seriell gesendeten Daten in eine parallele Form, eine Fehlerprüfung durch Hammingcode und Paritätsbit und ein Seitenadressen-Vergleich. Der Seitenadressen-Vergleich hat die Aufgabe, die Magazin- und Seitennummer einer über den Microcontroller 15 vorgewählten Seite mit der neu empfangenen Magazin- und Seitennummer zu vergleichen. Bei Übereinstimmung wird die Information dieser Seite über einen Datenbus in einen Seitenspeicher 16 geschrieben.

Mit dem Seitenspeicher 16 ist über einen weiteren Datenbus ein Zeichengenerator 17 verbunden. Dieser wandelt die im Seitenspeicher 16 eingeschriebenen, kodierten Zeichenwörter in ein Bildsignal RGB um, das mit Hilfe des Bildwiedergabeteils 18 auf dem Bildschirm 19 entsprechende alphanumerische und grafische Zeichen erzeugt. Zwischen dem Zeichengenerator 17 und dem Bildwiedergabeteil ist ein RGB-Umschalter 20 angeordnet, der es ermöglicht, zwischen der Wiedergabe von Fernsehbildern und Textseiten bzw. auf eine gemischte Darstellung zwischen beiden umzuschalten. Der Signalaufbereitungsteil 11 ist außerdem mit einem Audioteil 21 verbunden, der gegebenenfalls die Stereoinformation zurückgewinnt und die Tonwiedergabe übernimmt. An den Microcontroller 15 ist ein Fernbedienempfänger 22 zum Empfang von Bediensignalen angeschlossen. Mit dem Microcontroller 15 wird unter anderem eine Stand-by-Steuerung 23 realisiert.

Der Teletextteil weist erfindungsgemäß einen Steuerbitauswerter 24 auf. Im Gegensatz zu bekannten Mitteln zum Auswerten von Steuerbits, die auf die Belegung des Seitenspeichers 16 wirken oder den Zeichengenerator 17 veranlassen, bestimmte Zeichen bei der Wiedergabe eines Fernsehbildes auf dem Bildschirm 19 einzublenden, wie zum Beispiel zur Wiedergabe von Blitznachrichten oder Untertiteln, ist dieser Steuerbitauswerter 24 ausgangsseitig mit der Stand-by-Steuerung 23 verbunden.

Eingangsseitig ist der Steuerbitauswerter 24 am Seitenadressen-Vergleicher und dem Datenbus im Datenerkennungs- und Verarbeitungsteil 14 angeschlossen, an dem die seriell übertragenen Teletextdaten TTX in paralleler Form vorliegen. Der Seitenadressen-Vergleicher aktiviert durch Abgabe eines Signals S1 den Steuerbitauswerter 24, wenn die über den Fernbedienungsempfänger 22 in den Microcontroller 15 eingegebene Seitenvorwahladressenwerte mit der neu empfangenen Adressen- und Seitennummer übereinstimmt. Daraufhin prüft der Steuerbitauswerter 24, ob in der Kopfreihe, die dem Seitenadressen-Vergleich als neu empfangene Adressenwerte zugrunde lag, von der Teletextdienstredaktion das Steuerbit C8 gesetzt wurde, um die Aktualisierung der entsprechenden Textseite anzuzeigen. Entsprechend dem Teletextstandard befindet sich das Steuerbit C8 als viertes Bit im neunten Steuerwort nach dem Rahmenwort (Byte 12) in der Kopfreihe (Reihe O). Im Gegensatz zum Steuerbit 4, das z.B. auch bei Mehrfachseiten gesetzt wird, um den Seitenspeicher 16 zum Lesen einer nachfolgenden Unterseite zu löschen, darf das Steuerbit C8 nur dann gesetzt werden, wenn der Inhalt der entsprechenden Seite tatsächlich redaktionell überarbeitet wurde. Da die Magazinnummer im ersten Steuerwort und die Seitennummer im dritten und vierten Steuerwort übertragen werden, hat der Seitenadressen-Vergleicher ausreichend Zeit, um bis zum Übertragen des Steuerbits C8 den Steuerbitauswerter 24 durch Abgabe des Signals S1 zu aktivieren. Beim Erkennen des Steuerbits C8 erzeugt der Steuerbitauswerter 24 ein Steuersignal S2 für die Stand-by-Steuerung 23 im Microcontroller 15.

Die Stand-by-Steuerung 23 ist erfindungsgemäß so ausgelegt, daß das Fernsehgerät neben einem bekannten ersten Wartebetrieb in einen zweiten Wartebetrieb gesetzt werden kann.
Während im ersten Wartebetrieb nur der Fernbedienempfänger 22 und der Microcontroller 15 mit der Stand-by-Steuerung 23 von einem nicht dargestellten Bereitschaftsteil mit Betriebsenergie versorgt werden, um beim Eintreffen eines Steuerbefehls zum Einschalten alle Teile des Fernsehgerätes in den aktiven Betrieb zu schalten, sind im zweiten Wartebetrieb mindestens zusätzlich der Tuner 10, der Signalaufbereitungsteil 11 und vom Teletextteil 12 der Datenerkennungs- und Verarbeitungsteil 14 und der Steuerbitauswerter 24 mit dem Bereitschaftsteil verbunden.

Der zweite Wartebetrieb wird mit einem gesonderten Fernsteuerbefehl eingestellt, nachdem das Fernsehgerät auf die Betriebsart Teletextwiedergabe eingestellt war. Auf diese Weise wird erreicht, daß im zweiten Wartebetrieb, unabhängig vom inaktiven Betrieb der übrigen Fernsehgeräteschaltung, das zuletzt eingestellte Fernsehprogramm kontinuierlich weiterempfangen und das Teletextsignal TTX für die vorgewählte Textseite ausgewertet wird.

Beim Erkennen des Steuerbits C8 wird zumindest der Bildwiedergabeteil 18 mit dem Bildschirm 19 in den aktiven Zustand versetzt.

Die beschriebene Lösung hat den Vorteil, daß mit dem Fernsehgerät über einen längeren Zeitraum der Empfang und die Darstellung einer aktualisierten Textseite möglich ist, ohne daß der Nutzer durch ein ständig laufendes Fernsehprogramm abgelenkt wird. Nach dem Lesen der entsprechenden Textseite kann das Fernsehgerät in den zweiten Wartebetrieb zurückgeschaltet und die Energieaufnahme dadurch wesentlich gesenkt werden.

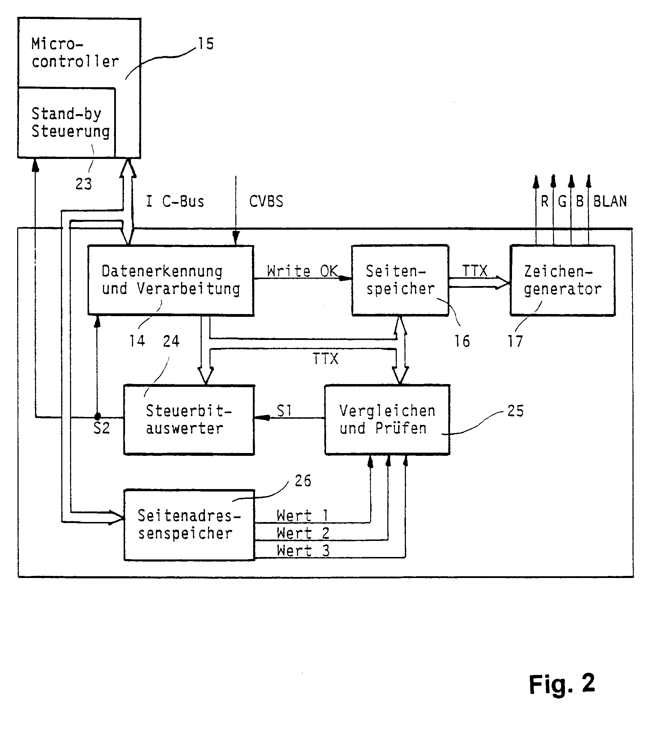

Wie bereits ausgeführt, kann der Teletextteil 12 des Fernsehgerätes dahingehend erweitert werden, daß im zweiten Wartebetrieb gleichzeitig die Aktualisierung von mehreren vorgewählten Textseiten eines Fernsehprogramms überwacht werden kann. Ein solcher Teletexteil ist auszugsweise in Fig. 2 dargestellt.

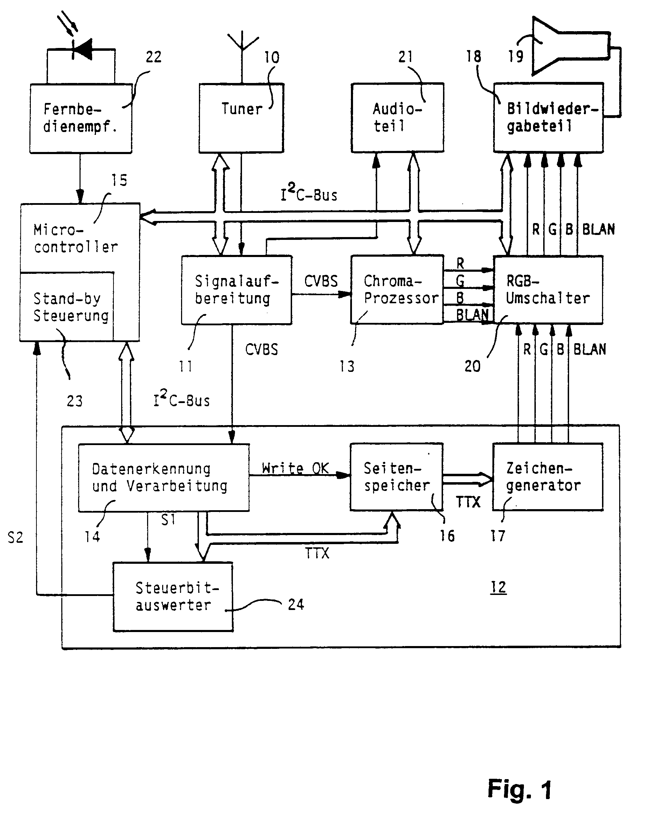

Die Schaltung für den Teletextteil von Fig. 2 unterscheidet sich von der in Fig. 1 durch einen erweiterten Seitenadressen-Speicher 25 und einer Vergleichs- und Prüfschaltung 26.

Im Gegensatz zur in Fig. 1 beschriebenen Lösung sind in den Seitenadressen-Speicher 25 mehrere, im dargestellten Beispiel drei beliebige, verschiedene Adressenwerte, bestehend aus Magazinnummer und Seitennummer, durch einen Nutzer über den Fernbedienempfänger 22 eingebbar. An entsprechenden Ausgängen stehen die eingegebenen Adressenwerte als Wert 1, Wert 2 und Wert 3 parallel zu Verfügung.

Die Vergleichs- und Prüfschaltung 26 ist an den Datenbus des Datenerkennungs- und Verarbeitungsteils 14 angeschlossen und wird dann aktiv geschaltet, wenn dieser eine Kopfreihe erkennt. Die mit dieser Kopfreihe übertragene Magazin- und Seitennummer wird parallel mit den im Seitenadressen Speicher 25 gespeicherten Adressenwerten verglichen. Stimmt der empfangene Adressenwert mit einem der im Speicher befindlichen überein, so erzeugt die Vergleichs- und Prüfschaltung 26 analog zum zuvor beschriebenen Seitenadressen-Vergleich das Signal S1 für den Steuerbitauswerter 24.
Im Gegensatz zur Lösung nach Fig. 1 wird jedoch dieses Signal S1 sowohl der Stand-by-Steuerung 23 als auch dem Datenerkennungs- und Verarbeitungsteil 14 zugeführt. Dieser veranlaßt über eine Schreibsteuerung für den Seitenspeicher 16 ein Löschen der bisher gespeicherten Teletextdaten TXT und ein Einlesen der neuen Daten, die der aktualisierten Seite entsprechen.

Im Ergebnis dessen wird bei einem Fernsehgerät mit einem Teletextteil 12 nach Fig. 2 immer dann der Bildwiedergabeteil aktiv geschaltet und die entsprechende Seite auf dem Bildschirm angezeigt, wenn eine der gespeicherten, vorgewählten Textseiten aktualisiert wurde.

Diese Lösung bietet damit gegenüber bekannten Lösungen den Vorteil, daß der Nutzer immer unmittelbar nach dem redaktionellen Aktualisieren (Up-date) einer der ausgewählten Textseiten, diese selbständig auf dem Bildschirm 19 angezeigt bekommt. Nach dem Lesen dieser Seite kann das Fernsehgerät wie im vorangegangenen Beispiel in den zweiten Wartebetrieb geschaltet werden. Sobald eine weitere Aktualisierung derselben oder einer anderen Textseite erfolgt, wird der Bildwiedergabeteil eingeschaltet und diese angezeigt.

Bei den dargelegten Ausführungsbeispielen wurde davon ausgegangen, daß der Bildwiedergabeteil 18 und der Bildschirm 19 zwischen dem inaktiven und dem aktiven Betrieb umgeschaltet werden. Für die Realisierung der Erfindung kann es jedoch vorteilhaft sein, parallel zum Bildwiedergabeteil 18 auch das Audioteil 21 aktiv zu schalten. Auf diese Weise wird der Nutzer zusätzlich akustisch auf die Aktualisierung einer Textseite hingewiesen. Darüber hinaus ist es möglich, anstelle der Tonwiedergabe des laufenden Fernsehprogramms ein akustisches Zeichen, das vom Fernsehgerät erzeugt wird, wiederzugeben.
Die Umschaltung vom zweiten Wartebetrieb in den aktiven Betrieb kann sowohl durch das Ab- oder Zuschalten der Betriebsspannung der entsprechenden Teile des Fernsehgerätes, wie zum Beispiel das Tonteil 22 und das Bildwiedergabeteil 18, oder durch entsprechende Muting-/Dunkelschaltungen in den Wiedergabeteilen über den I²C-Steuerbus des Microcontrollers erfolgen. Im letzteren Fall werden die für die Ton- und Bildwiedergabe nicht benötigten Schaltungsteile in einen leistungsarmen, inaktiven Zustand versetzt, in dem nur ein Minimum an Betriebsstrom aufgenommen wird und keine Signalverarbeitung erfolgt.

## Patentansprüche

1. Fernsehgerät mit einer Empfangs- und Akquirierschaltung (10, 11, 12) für Teletextsendungen bei dem in einem Wartebetrieb Schaltungsteile (18, 19, 21) von einem aktiven Betrieb in einen leistungsarmen, inaktiven Betrieb umschaltbar sind und bei dem die Empfangs- und Akquirierschaltung (10, 11, 12) aus Teletextdaten (TTX), welche mindestens einer ausgewählten Textseite entsprechen, ein Bildsignal (RGB) zum Darstellen dieser Textseiten auf einem Bildschirm (19) eines Bildwiedergabeteils (18) erzeugt und Steuerbits auswertet, die mit den Teletextdaten (TTX) für die ausgewählten Textseiten übertragen werden, **dadurch gekennzeichnet**, daß das Fernsehgerät in einen speziellen Wartebetrieb umschaltbar ist, in dem sich die Empfangs- und Akquirierschaltung (10, 11, 12) in einem aktiven Betrieb befindet und beim Erkennen eines bestimmten übertragenen Steuerbits (C8) ein Umschalten zumindest des Bildwiedergabeteils (18) vom inaktiven in den aktiven Betrieb und ein Ausgeben mindestens einer ausgewählten Textseite auf dem Bildschirm (19) auslöst.

2. Fernsehgerät nach Anspruch 1, dadurch gekennzeichnet, daß sich im speziellen Wartebetrieb eine Fernbedieneinrichtung (22) zum Empfangen und Umsetzen von Nutzerbefehlen und solche Teile der Empfangs- und Akquirierschaltung (10, 11, 12) im aktiven Betrieb befinden, die zum Empfangen und Erkennen des bestimmten übertragenen Steuerbits (C8) dienen und zum Zuschalten von inaktiven Schaltungsteilen (18, 19, 21) erforderlich sind.

3. Fernsehgerät nach Anspruch 1, dadurch gekennzeichnet, daß die Empfangs- und Akquirierschaltung (10, 11, 12) ein Steuerbit (C8) auswertet welches eine redaktionelle Aktualisierung der ausgewählten Textseite anzeigt und das Ausgeben von aktualisierten Textseiten veranlaßt.

4. Fernsehgerät nach Anspruch 1, dadurch gekennzeichnet, daß die Empfangs- und Akquirierschaltung (10, 11, 12) beinhaltet:
- einen Tuner (10) und einen Signalaufbereitungsteil (11), welche ein geträgertes Fernsehsignal mit eingelagerten Teletextdaten (TTX) zum Darstellen von Teletextseiten empfangen und dieses in ein kombiniertes Videosignal (CVBS) wandeln,
- einen Teletextteil (12) zum Erkennen und Dekodieren von Teletextdaten (TTX), zum Auswählen und Speichern dieser Daten für bestimmte vom Benutzer gewünschte Textseiten und zum Wandeln der gespeicherten Daten in ein Bildsignal (RGB), das mit dem Bildwiedergabeteil (18) darstellbar ist,
- Schaltmittel zum Betätigen einer Stand-by-Steuerung (23) beim Empfang von mit den Teletextdaten (TTX) übertragenen Steuerbits.

5. Fernsehgerät nach Anspruch 1 und 3, dadurch gekennzeichnet, daß ein Seitenadressen-Speicher (25) zum Speichern von verschiedenen Magazin- und Seitennummern für auswählbare Textseiten und eine Vergleichs- und Prüfschaltung (27) vorhanden ist, welche die Magazin- und Seitennummern von den übersandten Teletextdaten mit den gespeicherten Magazin- und Seitennummern vergleicht, bei Identität auf Vorhandensein des bestimmten übertragenen Steuerbits (C8) prüft und beim Erkennen des Steuerbits (C8) das Einschalten des Bildwiedergabeteils (18) und ein Ausgeben der entsprechend ausgewählten Textseite, für die das Steuerbit gesendet wurde auf dem Bildschirm (19) auslöst.

6. Fernsehgerät nach Anspruch 1 bis 3, dadurch gekennzeichnet, daß Mittel vorhanden sind, die das Fernsehgerät beim Umschalten vom aktiven Betrieb in den Wartebetrieb unabhängig von vorangegangenen Einstellungen auf intern vorprogrammierte Daten für einen Empfangskanal, mindestens eine Magazinnummer und mindestens eine Seitennummer einstellen.

7. Fernsehgerät nach Anspruch 6, dadurch gekennzeichnet, daß ein Teil der vorprogrammierten Daten für Magazinnummer und Seitennummer zum gezielten Einschalten eines bestimmten Fernsehgerätes dient, das an einem Kabelnetz angeschlossen ist.
